# FASCICULE DE BREVET EUROPEEN

(11) **EP 2 394 002 B1**
(45) Date de publication et mention de la délivrance du brevet: **15.03.2017**
(21) Numéro de dépôt: 10701532.3
(22) Date de dépôt: 28.01.2010
(51) Int. Cl.: E04D 11/00, A01G 1/00, E04D 13/04

(54) **BAC DE RETENTION TEMPORAIRE D'EAU EN TOITURE D'UN BATIMENT A DEBIT DE FUITE MAITRISE**
BEHÄLTER ZUM VORÜBERGEHENDEN HALTEN VON WASSER AUF DEM DACH EINES GEBÄUDES MIT EINER GESTEUERTEN LECKRATE
CONTAINER FOR TEMPORARILY HOLDING WATER ON THE ROOF OF A BUILDING WITH A CONTROLLED LEAKAGE RATE

(30) Priorité: 28.01.2009 FR 0950529
(43) Date de publication de la demande: 14.12.2011
(73) Titulaire: Sarl Le Prieure, 41160 Moisy (FR)
(72) Inventeur: LAME, Raphaël, F-41160 Moisy (FR); REDJALA-OUNNAS Tanegmart, F-41160 Moisy (FR)
(74) Mandataire: Regimbeau
(86) Numéro de dépôt international: PCT/EP2010/050994
(87) Numéro de publication internationale: WO 2010/086369

(56) Documents cités:
- EP-A- 1 044 599
- FR-A- 2 917 572
- JP-A- 2003 278 190

## Description

### DOMAINE DE L'INVENTION

Le domaine de l'invention est celui de la gestion des eaux pluviales.

L'invention concerne plus précisément un dispositif permettant de maîtriser l'évacuation des eaux pluviales sur des toitures, notamment sur des toitures en pente.

### ARRIERE PLAN DE L'INVENTION

Compte tenu de l'imperméabilisation croissante des sols urbains et des toitures, la gestion des eaux pluviales devient un problème majeur.

En effet, l'eau ne peut s'infiltrer dans les sols imperméabilisés ou sur les toitures. Une grande partie des eaux pluviales doit donc être collectée et traitée. Cette collecte présente un coût financier (canalisations, bassins de rétention, usines de traitement des eaux) et écologique car les eaux sont souillées par de nombreux polluants sur leur parcours (déchets, hydrocarbures, métaux lourds...).

En outre, un second problème lié à l'imperméabilisation des sols est le risque accru d'inondations. Lors de violents orages, des volumes d'eaux pluviales de plus en plus importants ruissellent, engendrant un engorgement des canalisations et des débordements.

Les toitures végétalisées apportent des réponses concrètes à ces deux problèmes dans la mesure où elles offrent une réelle gestion des eaux pluviales.

Les toitures végétalisées permettent en premier lieu une gestion de l'infiltration.

Le complexe de végétalisation (substrat et plantes) capte en effet une grande partie des pluies annuelles (de l'ordre de 50 % d'après de nombreux essais). L'eau stockée retourne ensuite dans l'atmosphère par évapotranspiration.

Les toitures végétalisées permettent donc de réduire le coefficient d'imperméabilisation des surfaces.

A cet égard, les bacs précultivés à réserve d'eau, tels que les bacs Hydropack® de la société Le Prieuré dont on trouvera une description dans le brevet EP 1 044 599 B1, améliorent encore cette fonction. La réserve d'eau contenue dans les alvéoles d'un tel bac augmente en effet la capacité de rétention. L'eau stagnante sera ensuite « pompée » par les racines des plantes qui se sont développées dans ces alvéoles.

Les documents FR2917572A, WO2006/106243A, US3751852A et WO 2004/020762A décrivent des bacs précultivés selon l'état de la technique.

Les toitures végétalisées permettent également une gestion de la rétention en jouant un rôle tampon (effet retard) lors de violents orages.

L'eau s'accumule dans le complexe de végétalisation (substrat et plantes) jusqu'à ce qu'il soit saturé en eau. Une fois que le complexe est saturé, il « relargue » l'excédent d'eau, à l'image d'une éponge.

De nombreux essais ont prouvé l'intérêt des toitures végétalisées dans ce domaine. Une bonne partie des eaux d'orage sera donc captée par le complexe de végétalisation. L'autre partie sera « relarguée », une fois que le complexe est saturé, quelques dizaines de minutes voire quelques heures plus tard. L'engorgement des canalisations est donc largement atténué.

Les toitures végétalisées permettent ainsi de réduire ce qui est appelé le coefficient de ruissellement (les essais montrent que ce coefficient est de 0,4 à 0,6 pour une toiture végétalisée au lieu de 1 pour un revêtement imperméable).

Les systèmes actuels de toitures végétalisés présentent cependant certaines limitations.

Si les toitures végétalisées permettent de réduire significativement le ruissellement, le coefficient pourrait être réduit davantage.

En outre, si les toitures végétalisées réduisent le coefficient de ruissellement moyen annuel d'environ 50%, elles n'assurent pas un abattement systématique de chaque évènement pluvieux. En effet, le coefficient de ruissellement n'est pas réellement maîtrisé mais varie sensiblement en fonction des caractéristiques de l'évènement pluvieux et de l'état hydrique de la toiture végétalisée. Ainsi, une toiture végétalisée déjà saturée par de précédentes pluies aura un coefficient de ruissellement quasiment égal à 1 et un effet retard nul, ce qui se traduit par un débit de fuite non réduit.

Des toitures stockantes ont ainsi été développées pour réduire très fortement et maîtriser le débit de fuite. Ces toitures stockantes assurent une rétention temporaire des eaux pluviales pour les évacuer selon un certain débit de fuite.

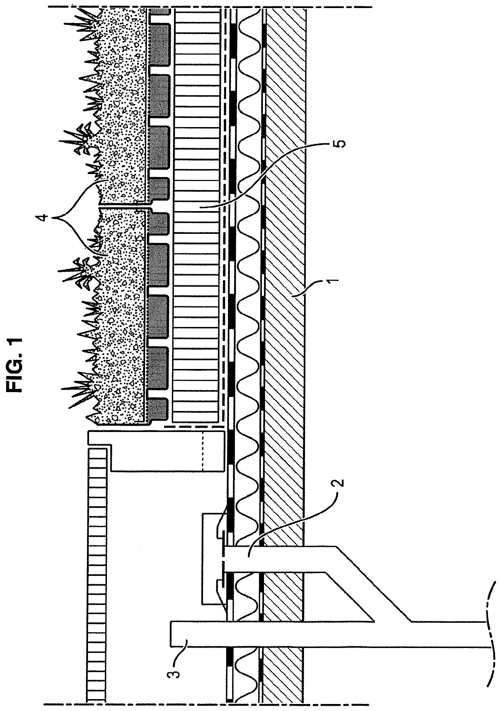

La figure 1 représente à cet égard une vue en coupe schématisée d'un exemple de réalisation possible d'une telle toiture stockante de pente nulle.

La toiture 1 présente deux orifices d'évacuation pluviale 2, 3.

Le premier orifice 2 est disposé en partie basse de la toiture 1 de manière à permettre une évacuation permanente. Son diamètre est relativement faible de sorte à réduire fortement l'évacuation d'eau. Le diamètre est ainsi calibré en fonction du débit de fuite maximum admis.

Le second orifice 3 joue le rôle d'un orifice de trop-plein et présente un diamètre relativement important. Le second orifice 3 est disposé plusieurs centimètres au dessus du premier orifice 2, selon le volume tampon nécessaire (tel que déterminé statistiquement par les relevés météorologiques locaux, par exemple les pluies décennales).

Une telle toiture stockante peut avantageusement être en outre équipée de bacs précultivés à réserve d'eau, tels que les bacs Hydropack® présentés précédemment. Les bacs précultivés 4 peuvent pour cela être surélevés sur une structure en nid d'abeilles 5 dans laquelle l'eau s'infiltrera.

Cependant, le modèle des toitures stockantes ne peut aujourd'hui trouver application qu'aux toitures de pente nulle.

En effet, sur des toitures de grandes dimensions, même une faible pente (2% ou plus, comme c'est le cas des bâtiments industriels, commerciaux, logistiques, etc.) représente une importante différence de niveau. Des relevés d'étanchéité de grande hauteur seraient donc nécessaires pour assurer la rétention temporaire de l'eau. D'autre part, la répartition du poids ne serait pas homogène ce qui obligerait à renforcer de façon importante la structure du bâtiment du côté des bas de pente.

A titre d'exemple, pour un bâtiment de 20 m de long, une pente de 3 % représente un dénivelé de 60 cm entre la partie haute et la partie basse de la toiture. Pour stocker 50 litres d'eau par m² (en moyenne) sur une telle toiture, il faut prévoir un relevé de minimum 24,5 cm en bas de pente. Pour un bâtiment de 30 m de long et d'une pente de 3 % également, il faut prévoir un relevé de 30 cm de hauteur. Quant à la répartition du poids, la surcharge liée au stockage temporaire de l'eau en bas de pente sera de d'environ 245 kg/m² dans le premier cas et de 300 kg/m² dans le second cas.

Ces contraintes techniques (hauteur des relevés de toiture et surcharges en bas de pente) rendent ainsi impossible la rétention temporaire d'eau sur des toitures même à faible pente.

### EXPOSÉ DE L'INVENTION

L'invention a notamment pour objectif de rendre possible la rétention temporaire des eaux pluviales sur des toitures présentant une pente afin d'en réduire et d'en maîtriser le débit de fuite.

Cet objet est atteint par le bac selon la revendication 1.

Dans cette optique, l'invention propose, selon un premier aspect, un bac de rétention temporaire d'eau en toiture d'un bâtiment, comprenant un fond, une paroi latérale entourant le fond et un orifice de trop- plein pour évacuer l'eau en surplus lorsque le volume d'eau recueilli par le bac excède un volume tampon, les dimensions du fond étant faibles vis-à-vis des dimensions d'une toiture en pente sur laquelle le bac peut être positionné de sorte que la charge d'eau est répartie de façon homogène sur la surface de la toiture lorsqu'une pluralité de bacs de mêmes dimensions recouvre la surface de la toiture, le bac étant caractérisé en ce qu'il comprend des moyens d'évacuation d'eau configurés pour contraindre l'eau d'un volume de stockage temporaire inférieur au volume tampon à s'écouler selon un débit de fuite constant, lesdits moyens d'évacuation d'eau comprenant un obturateur contrôlé pour modifier l'ouverture d'un orifice d'évacuation lorsque le niveau de l'eau du volume de stockage temporaire diminue ou augmente de manière à évacuer l'eau du volume tampon selon un débit de fuite constant.

Certains aspects préférés, mais non limitatifs, de ce bac de rétention temporaire d'eau sont les suivants :
- les moyens d'évacuation d'eau selon un débit de fuite régulé comprennent un obturateur contrôlé pour ajuster l'ouverture d'un orifice d'évacuation en fonction du volume de stockage temporaire ;
- l'obturateur est associé à un flotteur par l'intermédiaire d'un bras, le bras étant apte à pivoter en réponse au changement du volume de stockage temporaire d'eau détecté par le flotteur pour entraîner une rotation de l'obturateur devant ou à travers l'orifice d'évacuation ;
- l'obturateur est une portion de disque apte à être entraînée en rotation devant l'orifice d'évacuation et dans laquelle est pratiquée une fente d'ouverture progressive assurant un débit de fuite constant indépendant de la hauteur d'eau dans le bac ;
- l'obturateur est une corne apte à être entraînée en rotation à travers l'orifice d'évacuation, la corne étant conformée de manière à assure un débit de fuite constant à travers l'orifice d'évacuation, indépendamment de la hauteur d'eau dans le bac ;
- l'obturateur est un cône apte à être entraîné en translation par un flotteur à travers l'orifice, la section du cône diminuant à l'approche du flotteur de sorte que l'ouverture de l'orifice d'évacuation diminue au fur et à mesure que le niveau d'eau augmente dans le bac en assurant ainsi un débit de fuite constant ;
- l'orifice de trop-plein constitue l'orifice d'évacuation ;
- l'orifice d'évacuation est distinct de l'orifice de trop-plein, l'orifice de trop-plein étant agencé au-dessus de l'orifice d'évacuation à une distance définissant le volume tampon ;
- le bac comprend en outre des moyens perméables de support d'un complexe de végétation ;
- les moyens perméables de support sont formés par une grille supportée par une ou plusieurs surfaces support définies par des îlots s'étendant depuis le fond ;
- les moyens perméables de support du complexe de végétation sont formés par un bac précultivé conformé pour venir s'encastrer dans le bac de rétention temporaire d'eau, ou venu de matière avec le bac de rétention temporaire d'eau ;
- le bac précultivé dispose d'une base dans laquelle une pluralité d'alvéoles est formée, les alvéoles étant séparées par des cloisons de séparation constituées de parois d'alvéoles s'étendant depuis la base et d'une surface support reliant les bords supérieurs des parois, une pluralité de trous de drainage étant formée à travers les surfaces support ;
- le bac de rétention temporaire d'eau comprend une pluralité de cloisons de séparation constituées de parois d'alvéoles s'étendant depuis le fond et d'une surface support reliant les bords supérieurs des parois, formant avec le fond une pluralité d'alvéoles, une pluralité de trous de drainage étant formée à travers les surfaces support pour former lesdits moyens perméables de support d'un complexe de végétation ;
- il comprend une dalle porteuse perméable agencée parallèlement au fond ;
- il comprend une fermeture étanche partielle s'étendant parallèlement au fond depuis la partie supérieure de la paroi latérale ;
- la superficie du fond est inférieure à 2 m², de préférence inférieure à 1 m² ;
- le débit de fuite régulé est au plus de 10l/s/ha, et de préférence au plus de 5l/s/ha.

Selon un autre aspect, l'invention concerne un système de rétention temporaire d'eau en toiture d'un bâtiment constitué d'une pluralité de bacs destinés à être accrochés les uns aux autres dont l'un au moins est un bac selon le premier aspect de l'invention.

### BREVE DESCRIPTION DES DESSINS

D'autres aspects, buts et avantages de la présente invention apparaîtront mieux à la lecture de la description détaillée suivante de formes de réalisation préférées de celle-ci, donnée à titre d'exemple non limitatif, et faite en référence aux dessins annexés sur lesquels :
- la figure 1, déjà commentée, est une vue en coupe schématisée d'une toiture stockante de pente nulle ;
- la figure 2 représente un mode de réalisation possible d'un bac conforme à un mode de réalisation possible de l'invention ;
- les figures 3a-3b, 4a-4b, 5a-5b et 6a-6b représentent différents modes de réalisation possible de moyens d'évacuation d'eau à débit de fuite constant ;
- la figure 7 illustre un mode de réalisation possible d'un bac selon l'invention disposant d'un volume résiduel de stockage d'eau ;
- la figure 8 illustre un mode de réalisation possible d'un bac selon l'invention disposant d'une fermeture étanche partielle ;
- les figures 9a-9c illustrent différentes connexions possibles de bacs entre eux.

### DESCRIPTION DETAILLEE DE L'INVENTION

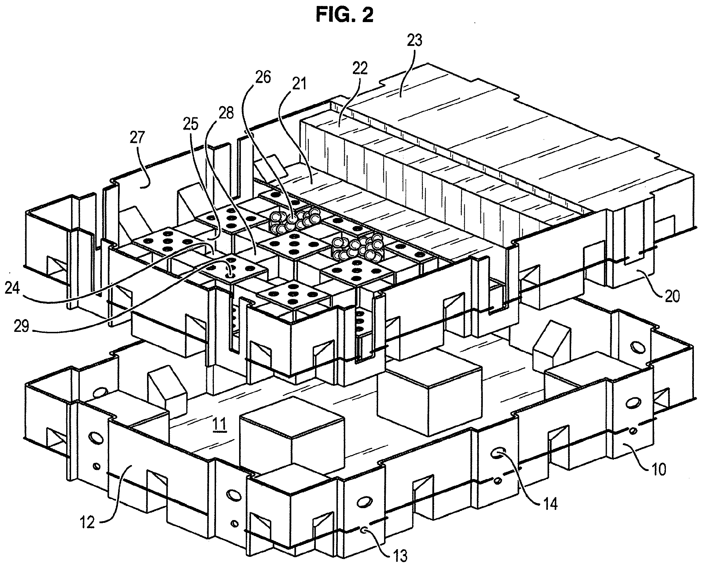

En référence à la figure 2, on a représenté un bac de rétention temporaire d'eau en toiture d'un bâtiment conforme à un mode de réalisation possible de l'invention.

Le bac 10 comprend un fond 11, de forme rectangulaire dans l'exemple représenté, et une paroi latérale 12 entourant le fond.

Selon l'invention, les dimensions du fond sont faibles vis-à vis des dimensions d'une toiture, notamment d'une toiture en pente, sur laquelle le bac est destiné à être positionné. De telle sorte, la charge d'eau susceptible de s'accumuler dans le bac en bas de pente est sensiblement équivalente à celle susceptible de s'accumuler dans le bac en haut de pente.

Plus particulièrement, l'intérêt de bacs de petites dimensions est de pouvoir répartir la masse d'eau de façon homogène sur la surface de l'ensemble de la toiture. En effet, tous les bacs porteront systématiquement et automatiquement la même masse, en bas de pente comme en haut de pente.

L'invention propose ainsi d'équiper une toiture à l'aide d'une pluralité de bacs de rétention temporaire d'eau de faibles dimensions, indépendants les uns des autres. On s'affranchit ainsi du problème de la répartition des eaux pluviales (qui s'accumulent en bas de pente) et donc des contraintes de surcharges et de hauteurs de relevés importantes.

La superficie du fond plein est par exemple inférieure à 2 m², de préférence inférieure à 1 m². A titre d'exemple, le fond 11 est rectangulaire et mesure 60 centimètres de longueur et 40 centimètres de largeur.

Le bac est de préférence réalisé en matière inerte et inaltérable, en plastique par exemple.

Le bac 10 comprend par ailleurs un orifice de trop-plein pour évacuer l'eau en surplus lorsque le volume d'eau recueilli par le dispositif excède un volume tampon, ainsi que des moyens d'évacuation d'eau configurés pour contraindre l'eau d'un volume de stockage temporaire inférieur au volume tampon à s'écouler selon un débit de fuite régulé.

Dans le cadre de l'invention le débit de fuite est de manière préférentielle au plus de 10l/s/ha, de manière encore plus préférentielle au plus de 5l/s/ha. D'une manière générale, le débit de fuite est adapté au bâtiment et à sa localisation, de manière à répondre aux directives locales relatives à la gestion de l'eau. Le débit de fuite peut idéalement être réduit à 1 l/s/ha.

Selon une première variante représentée sur la figure 2, le bac 10 comprend, à une première hauteur depuis le fond 11, des moyens d'évacuation 13 configurés pour permettre une évacuation d'un volume d'eau inférieur au volume tampon selon un très faible débit, et, à une seconde hauteur depuis le fond 11, un orifice de trop-plein 14 de haut débit, la seconde hauteur étant supérieure à la première hauteur de manière à définir le volume tampon de stockage temporaire d'eau apte à recueillir les pluies d'orage.

Ces moyens d'évacuation à débit de fuite régulé comprennent au moins un orifice d'évacuation de faible débit 13 traversant la paroi latérale à la première hauteur, dont le diamètre est choisi pour permettre une évacuation de faible débit, connu et maîtrisé. En variante, ces moyens d'évacuation peuvent être formés par une membrane poreuse ou par un régulateur.

L'orifice de trop-plein 14 permet quant à lui une évacuation de haut débit. Le diamètre de l'orifice de trop-plein est typiquement plus important que celui d'un orifice d'évacuation de faible débit 13.

La différence de hauteur entre les moyens d'évacuation à débit de fuite régulé 13 et les moyens d'évacuation de trop-plein 14 détermine un volume tampon de stockage d'eau apte à recueillir les pluies d'orage, même de forte intensité. Le volume tampon s'écoulera doucement après l'orage, à un débit (de fuite) déterminé par le débit des moyens d'évacuation (par exemple par le diamètre du ou des orifices d'évacuation de faible débit 13). Le volume tampon sera à nouveau vide quelques minutes ou quelques heures après l'orage, et pourra à nouveau jouer pleinement son rôle tampon lors de nouvelles précipitations.

On notera que la première hauteur peut être nulle (les premiers moyens d'évacuation d'eau étant alors agencés dans le fond 11 du bac 10). Dans ce cas de figure, le bac 10 peut être surélevé par des pieds de manière à ce que les moyens d'évacuation d'eau 13 débouchent au-dessus d'éventuelles flaques d'eau présentes sur la toiture.

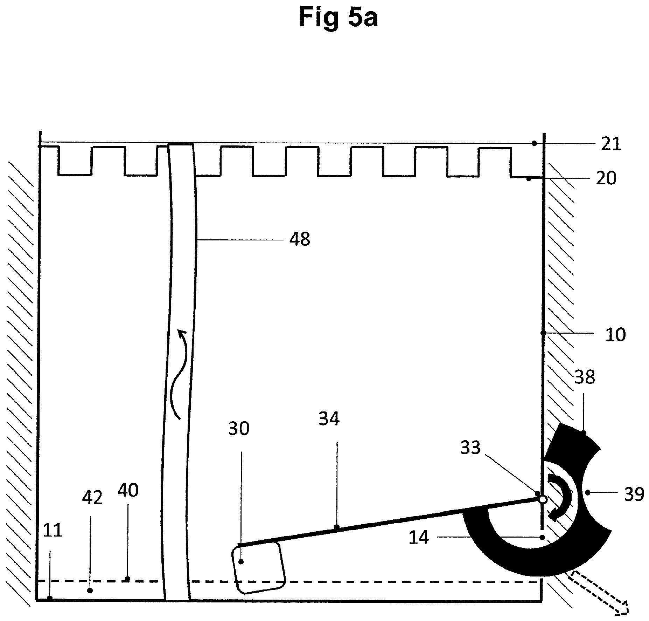

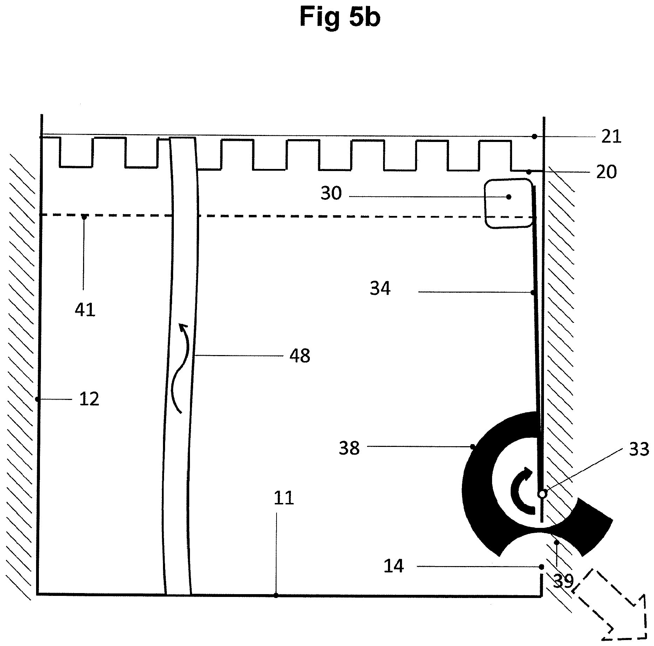

La première hauteur peut aussi bien se trouver à quelques centimètres (à titre d'exemple, l'orifice d'évacuation de faible débit 13 est alors percé dans la paroi latérale 12, ou dans une cloison séparant des alvéoles formées dans le fond 11), par exemple inférieure à 3 centimètres, de manière à constituer un petit volume de stockage résiduel d'eau en fond de bac (cf. figure 5a par exemple).

On relèvera que si les moyens d'évacuation 13 consistaient en un simple orifice, le débit de fuite ne serait pas constant. Le débit diminue effectivement au fur et à mesure que la hauteur d'eau diminue dans le bac selon la formule mathématique suivante : Q = Ω x Surface exutoire x (2 x g x h)^{0,5}, où Q désigne le débit de fuite, Ω est un coefficient lié à la géométrie de l'orifice, g désigne l'accélération de la pesanteur et h représente la hauteur d'eau. A titre d'exemple, entre des hauteurs d'eau de 100 mm et 10 mm, le débit pourrait être divisé par trois.

L'invention prévoit que l'on vienne modifier l'ouverture d'un orifice d'évacuation lorsque le niveau de l'eau diminue ou augmente, au moyen d'un mécanisme qui ajuste l'ouverture de l'orifice en fonction de la hauteur d'eau dans le bac. Les moyens d'évacuation d'eau à débit de fuite régulé selon l'invention peuvent notamment être configurés pour venir plus ou moins occulter une partie d'un orifice en fonction du volume temporaire d'eau de manière à évacuer l'eau du volume tampon selon un débit de fuite constant.

Dans le cadre d'une première variante, l'orifice dont l'ouverture est ajustée est un orifice d'évacuation de faible débit 13, distinct de l'orifice de trop-plein 14, et dont la surface est déterminée par le volume tampon et le débit de fuite recherché.

Selon une seconde variante qui sera détaillée plus en détail par la suite, le trop-plein et le volume temporaire d'eau sont évacués par un seul et même orifice. Dans cette seconde variante, l'orifice dont l'ouverture est ajustée est l'orifice de trop-plein lui-même, dont la surface est déterminée par le débit de trop-plein recherché.

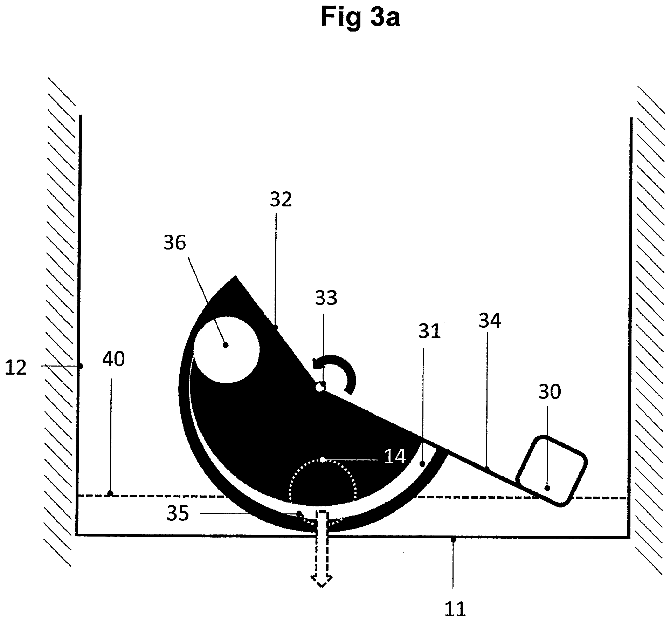

Différents modes de réalisation de moyens d'évacuation d'eau à débit de fuite constant sont représentés sur les figures 3a-3b, 4a-4b, 5a-5b et 6a-6b. Ces figures représentent plus particulièrement la seconde variante présentée ci-dessus, mais on comprendra que les principes qui y sont représentés peuvent aisément être utilisés dans le cadre de la première variante, notamment en venant modifier la forme de l'obturateur.

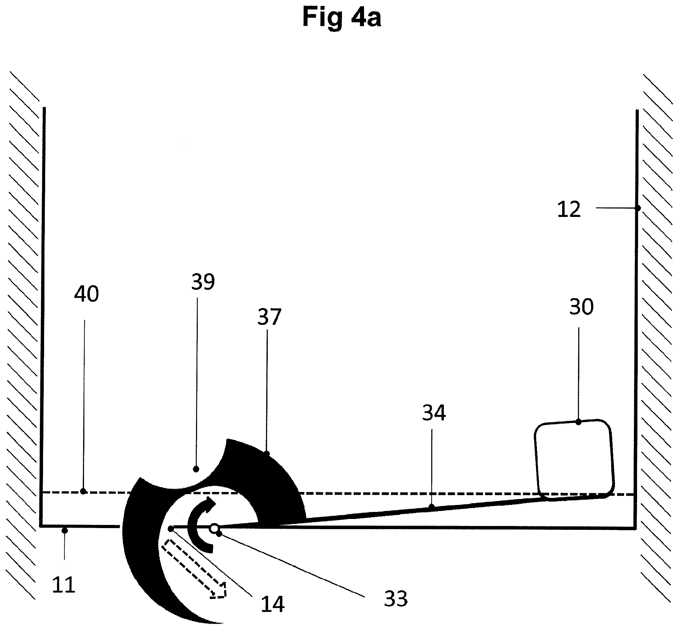

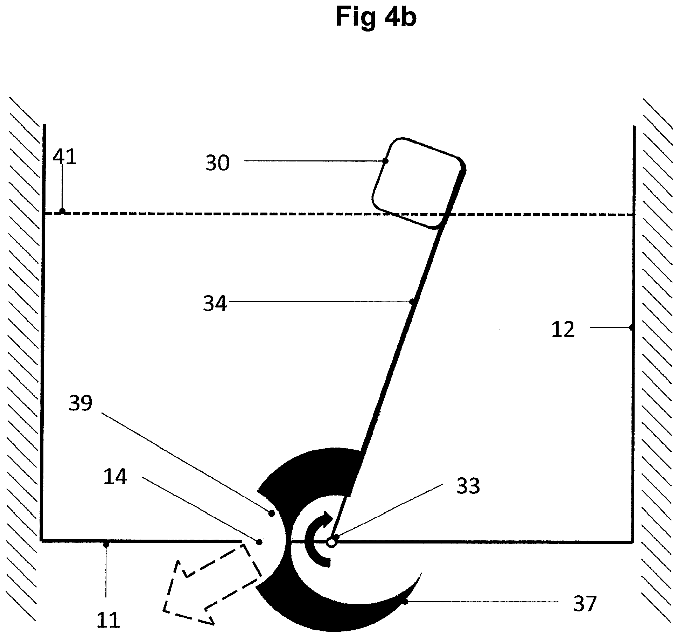

Dans chacune des variantes représentées sur les figures 3a-3b, 4a-4b et 5a-5b, les moyens d'évacuation d'eau à débit de fuite constant comprennent un flotteur 30 connecté à un bras pivotant 34 autour d'un axe 33 perpendiculaire à la paroi (figures 3a-3b et figures 5a-5b) ou au fond (figures 4a-4b) du bac et auquel est relié un obturateur 32, 37, 38. Le bras 34 pivote en réponse au changement de la hauteur 40 de rétention temporaire d'eau détecté par le flotteur 30 et entraîne l'obturateur 32, 37, 38 en rotation autour de l'axe 33 devant ou à travers l'orifice 14.

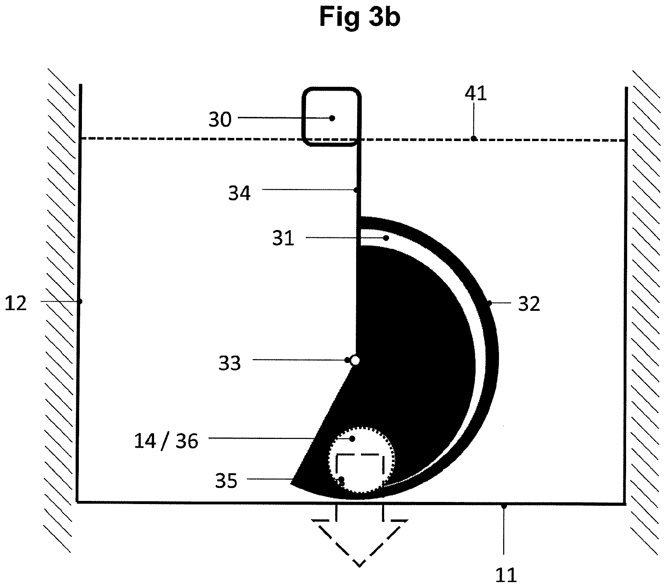

Selon un premier mode de réalisation représenté sur les figures 3a et 3b, l'obturateur 32 est entraîné en rotation devant l'orifice 14. L'obturateur prend par exemple la forme d'une portion de disque 32 dans laquelle une fente 31 d'ouverture progressive est pratiquée. Cette ouverture progressive permet d'assurer un débit de fuite constant lorsque le volume temporaire d'eau diminue ou augmente en entraînant la rotation du disque 32 et donc la modification de la position de la fente devant l'orifice.

En variante, on peut prévoir, à la place d'une fente pratiquée dans une portion de disque, une lame dont l'épaisseur varie progressivement pour assurer un débit de fuite constant lorsque la lame vient occulter l'ouverture.

En référence à la figure 3a, l'orifice 14 est formé à travers la paroi du bac à proximité du fond 11 du bac. La fente 31 d'ouverture progressive est pratiquée dans un disque 32 monté de manière rotative autour de l'axe de rotation 33 perpendiculaire à la paroi. Le disque est relié au flotteur 30 via le bras pivotant 34 autour de l'axe 33, de manière à pivoter contre la paroi 12 présentant l'orifice en réponse aux changements de niveau d'eau dans le bac tels que détectés par le flotteur. L'ouverture de la fente 31 s'élargit à mesure que l'on se rapproche du flotteur de sorte que l'obturateur couvre de manière plus importante l'orifice lorsqu'un important volume d'eau est à écouler (forte pression) que lorsqu'un faible volume d'eau est à écouler (faible pression). La progressivité de l'ouverture permet d'assurer un débit de fuite constant quel que soit le volume d'eau restant à écouler.

Afin de minimiser les risques de colmatage, on peut par ailleurs prévoir de rapporter, par collage par exemple, une tige 35 sur le rebord de l'orifice, la tige étant dirigée vers l'intérieur du bac de manière à pénétrer à l'intérieur de la fente 31.

Selon un second mode de réalisation représenté sur les figures 4a-4b et les figures 5a-5b, l'obturateur 37, 38 est entraîné en rotation autour d'un axe 33 à travers l'orifice 14.

L'obturateur prend par exemple la forme d'une corne 37, 38 associée à un bras 34 pivotant autour de l'axe 33 sous l'action d'un flotteur 30 auquel il est connecté. La corne dont le diamètre augmente progressivement vient ainsi ajuster l'ouverture de l'orifice en fonction du volume d'eau restant à écouler dans le bac. L'orifice peut être pratiqué dans le fond du bac (figures 4a-4b) ou à travers une paroi du bac (figures 5a-5b) ce qui permet de créer un volume d'eau résiduel 42.

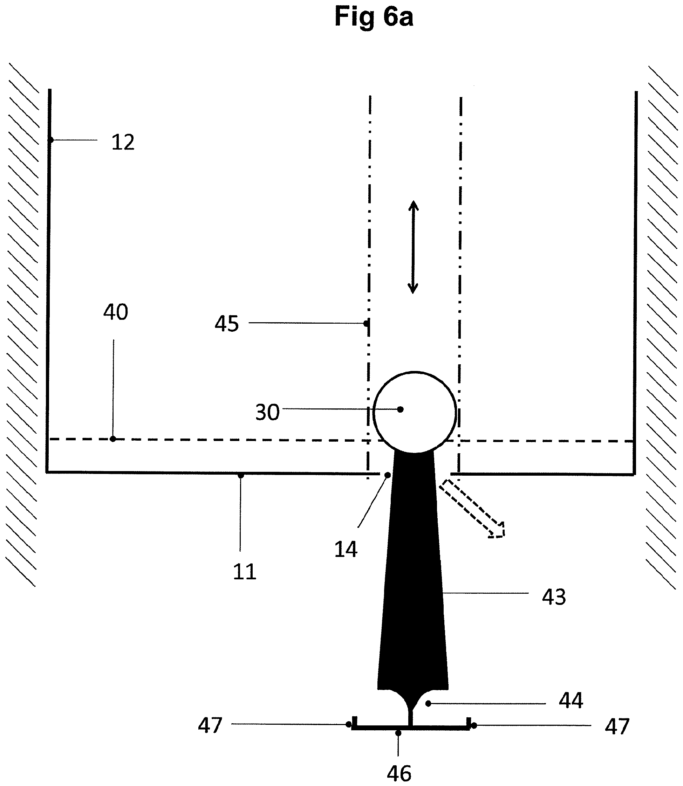

Dans la variante représentée sur les figures 6a-6b, les moyens d'évacuation d'eau à débit de fuite constant comprennent un obturateur 43 directement entraîné par un flotteur 30 en translation à travers l'orifice 14.

L'obturateur est par exemple formé par un cône 43 à la tête duquel est prévu un flotteur 30. L'orifice 14 est ici pratiqué dans le fond du bac, tandis que la section du cône diminue à l'approche du flotteur. De telle manière, l'ouverture de l'orifice diminue au fur et à mesure que le niveau d'eau augmente dans le bac.

La base du cône peut être suffisamment large vis-à-vis de la surface de l'orifice pour maintenir l'obturateur en place lorsque le volume tampon (volume de rétention temporaire maximal) est atteint. Dans ce cas de figure, l'orifice 14 est bouché lorsque le volume tampon est atteint, et il faut donc prévoir un orifice de trop-plein distinct pour évacuer l'eau en surplus.

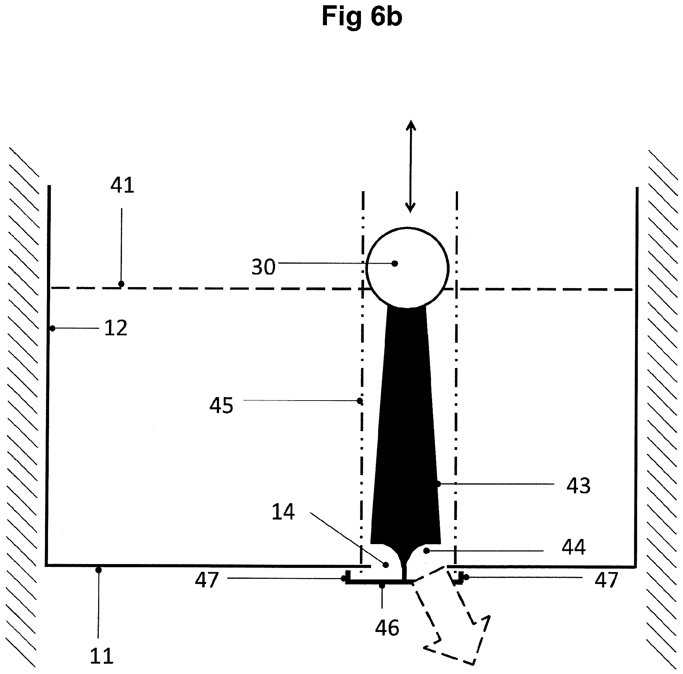

En variante (cf. figure 6b), on peut associer à la base du cône un support 46, par exemple cruciforme, portant des ergots verticaux 47 venant appuyer contre le fond 11 du bac lorsque le volume tampon est atteint en maintenant ainsi l'obturateur en place. Dans ce cas de figure, l'orifice 14 est totalement ouvert lorsque le volume tampon est atteint. Cet orifice peut donc également jouer le rôle d'un orifice de trop-plein.

Le mouvement de va-et-vient de l'obturateur peut en outre être guidé par l'intermédiaire d'un tuyau poreux 45 disposé verticalement au dessus de l'orifice et dont le diamètre dépasse celui du flotteur et de l'obturateur, de quelques millimètres seulement.

En outre, le flotteur 30 est dimensionné de manière à être suffisamment grand vis-à-vis de la surface de l'orifice pour rester bloqué à l'intérieur du bac lorsque celui-ci est vide, en maintenant ainsi l'obturateur.

On relèvera par ailleurs que le bac doit être surélevé d'une hauteur au moins égale à la hauteur du cône.

On notera que dans les modes de réalisation représentés sur les figures 4a-4b, 5a-5b et 6a-6b, l'obturateur 37, 38, 43 traverse l'orifice. Le va-et-vient ainsi créé à travers l'orifice permet de minimiser les risques de colmatage. On peut par ailleurs doter le corps de l'obturateur traversant d'aspérités qui viennent faciliter l'évacuation de particules hors du bac.

On a vu précédemment que selon une variante de réalisation le trop-plein et le volume temporaire d'eau sont évacués par un seul et même orifice. Cette variante est avantageuse en ce qu'elle permet d'évacuer les particules issues de complexes de végétation associés au bac de rétention temporaire d'eau en toiture de bâtiment (voir ci-après). Cette variante s'avère également avantageuse en ce qu'elle évite d'avoir à créer en hauteur un orifice de trop-plein, dont la position varierait en fonction de la surcharge admissible.

Dans le cadre de cette variante, l'obturateur 37, 38, 43 est conformé de manière à permettre l'ouverture maximale de l'orifice d'évacuation 14 lorsque le flotteur atteint sa hauteur maximale 41 correspondant au volume tampon d'eau. L'orifice présente ici une surface importante, par exemple un diamètre d'au moins 1 cm.

Dans le cadre du mode de réalisation illustré sur les figures 3a et 3b, la fente 31 pratiquée dans le disque se prolonge par une percée 36 dont la surface est au moins égale à celle de l'ouverture 14 de manière à ce que ladite percée coïncide avec l'orifice lorsque le flotteur 30 atteint sa hauteur maximale 41.

Dans le cadre du mode de réalisation illustré sur les figures 4a-4b et 5a-5b, la corne 35 présente une dépression 39 venant à travers l'orifice lorsque le flotteur atteint sa hauteur maximale 41.

Dans le cadre du mode de réalisation illustré sur les figures 6a-6b, une dépression 44 est creusée dans la base du cône, ce qui permet d'évacuer le trop-plein à travers toute la surface de l'orifice lorsque la base du cône se retrouve en hauteur par rapport au fond du bac (cf. figure 6b).

On notera qu'en intégrant l'évacuation de faible débit au trop-plein, on peut faire varier le volume tampon en fonction de la surcharge admissible sur la toiture, et ce en conservant toujours le même bac : la hauteur du bac et la surface de l'orifice d'évacuation restent effectivement les mêmes. En effet, quel que soit l'obturateur considéré (disque à fente, corne ou cône), il est possible d'en adapter le dimensionnement (largeur de la fente, longueur du cône, épaisseur du cône ou de la corne, positionnement de la dépression de trop-plein) au débit de fuite souhaité et à la surcharge maximale admissible.

Dans le cadre d'un mode de réalisation possible de l'invention, on constitue un petit volume de stockage résiduel d'eau en fond de bac, et ce notamment afin d'assurer, via des mèches synthétiques, l'alimentation en eau d'un complexe de végétation qui serait associé au bac de rétention temporaire.

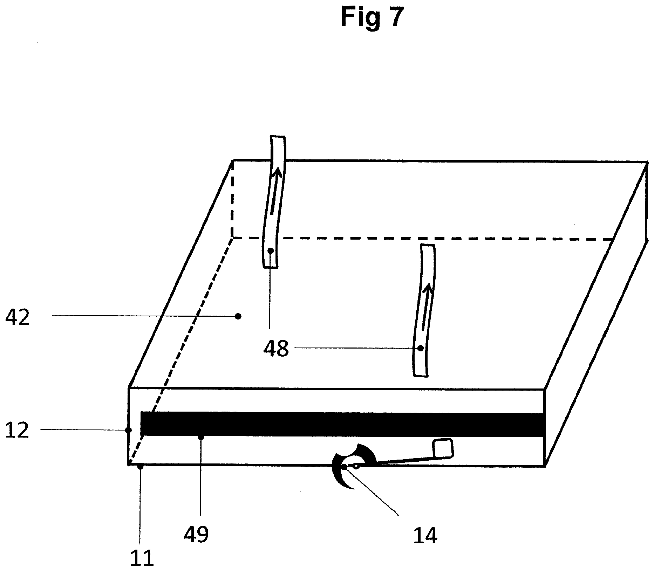

Pour ce faire, l'orifice d'évacuation peut être positionné à une certaine distance du fond du bac, à travers une paroi (cf. figures 5a-5b). Comme représenté sur la figure 7, on peut également prévoir une ou plusieurs cloisons 49 partant du fond du bac et s'étendant sur une hauteur inférieure à celle de la paroi latérale, la ou les cloisons divisant le bac en une ou plusieurs régions dont l'une au moins n'est pas reliée à des moyens d'évacuation d'eau et peut ainsi former une réserve d'eau 42.

L'eau stagnante est alors disponible pour les plantes du complexe de végétation. Des mèches synthétiques 48 (cf. figures 5a-5b et figure 7) accrochées au fond du bac et traversant un support de végétation 49 par des orifices de drainage, sont reliées à un filtre 21 (cf. figure 5a) sur lequel repose le complexe de végétation et y conduisent l'eau par capillarité.

Outre la maîtrise du débit de fuite, le bac de rétention temporaire d'eau en toiture d'un bâtiment selon l'invention peut effectivement également permettre la gestion de l'infiltration en prévoyant l'utilisation d'un complexe de végétation. Une partie des eaux pluviales peut ainsi être absorbée par le complexe de végétation puis renvoyée dans l'atmosphère par évapotranspiration, ce qui permet de nettement réduire l'infiltration.

Les eaux pluviales qui ne sont pas absorbées par le complexe de végétation descendent quant à elles dans le bac où le débit de fuite de cet excédant d'eau sera régulé.

Comme représenté sur la figure 2, le bac peut à cet effet comporter des moyens perméables de support d'un complexe de végétation 20, où ledit complexe de végétation est par exemple formé d'un filtre microporeux 21, d'une couche de substrat de culture 22 déposée sur le filtre 21 et d'une végétation 23 semée et cultivée sur la couche de substrat 22.

Selon le mode de réalisation préférentiel de l'invention représenté sur la figure 2, les moyens perméables de support d'un complexe de végétation 20 sont formés par un bac précultivé, plus particulièrement par un bac Hydropack® de la société Le Prieuré (dont on trouvera une description dans le brevet EP 1 044 599 B1).

Sur cette figure 2, le bac précultivé 20 est conformé pour venir s'encastrer dans le bac de rétention temporaire d'eau 10.

Selon une variante, le bac précultivé 20 est venu de matière avec le bac de rétention temporaire d'eau 10 de manière à former un bac à double fond. Le fond inférieur est formé par le fond 11, tandis que le fond supérieur est formé par un fond (base 24 dans ce qui suit) identique à celui du bac précultivé Hydropack®.

Dans ces deux cas de figure, le bac précultivé 20 présente une base 24 depuis laquelle s'étend une pluralité d'alvéoles.

Chaque alvéole est fermée par une paroi latérale d'alvéole 25 de manière à constituer un volume de réserve d'eau dans lequel des agrégats minéraux 26 peuvent être disposés.

Les alvéoles sont de préférence reliées entre elles par des moyens de communication d'eau, de telle manière que le réseau d'alvéoles définit une réserve d'eau, par exemple de l'ordre de 8 litres/m².

La hauteur de la paroi latérale 25 des alvéoles est de préférence inférieure à la hauteur de la paroi latérale 27 entourant la base 24 du bac précultivé 20 de telle sorte que le complexe de végétation peut être accueilli dans le bac précultivé 20.

Les alvéoles sont séparées par des cloisons de séparation constituées de parois latérales d'alvéoles 25 s'étendant depuis la base 24 du bac 20 et d'une surface support 28 reliant les bords supérieurs des parois d'alvéoles 25, globalement parallèle à la base 24, et sur laquelle le complexe de végétation 21-23 peut être disposé.

Des trous de drainage 29 sont percés dans les surfaces support 28 pour assurer la perméabilité des moyens de support du complexe de végétation et permettre ainsi une évacuation rapide de l'excédent d'eau vers le fond 11 du bac de rétention temporaire d'eau 10. A titre d'exemple, on prévoit 500 trous de drainage 29 par m² permettant de relarguer l'excédent d'eau une fois le complexe de végétation saturé d'eau et les alvéoles remplies d'eau.

Selon un autre mode de réalisation possible de l'invention (non représenté), les moyens perméables de support du complexe de végétation sont formés par une grille supportée par une ou plusieurs surfaces support définies par des îlots s'étendant depuis le fond 11 du bac de rétention temporaire d'eau 10.

Selon encore un autre mode de réalisation de l'invention, le bac de rétention temporaire d'eau 10 forme lui-même un bac précultivé. Le bac 10 est par exemple un bac Hydropack® du type de celui décrit précédemment, modifié afin de maîtriser le débit de fuite.

Les moyens d'évacuation d'eau à débit de fuite constant peuvent ainsi être agencés au niveau de la base 24 du bac précultivé (la base 24 formant ici le fond 11 du bac de rétention temporaire) ou dans la partie inférieure d'une paroi latérale d'alvéole 25.

La hauteur des alvéoles peut par ailleurs être modifiée par rapport à celle d'un bac Hydropack® standard pour augmenter le volume de réserve d'eau à 50 litres/m² (plutôt que 8 litres/m²). On notera que la réserve d'eau n'existe plus du fait de l'évacuation en continu : le volume de 50 litres/m² correspond ainsi au volume tampon du bac de rétention temporaire d'eau qui va s'écouler selon le faible débit de fuite.

Le bac de rétention temporaire selon l'invention n'est cependant pas limité par son utilisation en conjonction avec un complexe de végétation pour permettre une gestion de l'infiltration. Le bac 10 peut ainsi comporter, en lieu et place des moyens perméables de support d'un complexe de végétation, une dalle porteuse perméable agencée parallèlement au fond. La dalle porteuse perméable est par exemple une dalle poreuse, notamment une dalle en ciment poreux.

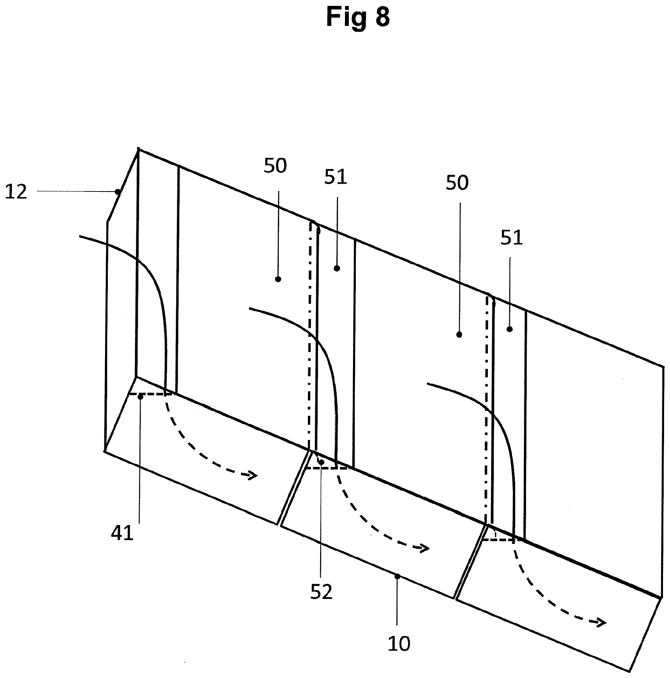

On relèvera par ailleurs que lorsque le bac de rétention temporaire d'eau est disposé sur une forte pente, le volume de rétention se retrouve drastiquement réduit. Dans un mode de réalisation avantageux de l'invention représenté sur la figure 8, on vient doter le bac d'une fermeture étanche supérieure partielle 50, qui s'étend par exemple parallèlement au fond depuis la partie supérieure de la paroi latérale.

Cette fermeture supérieure partielle permet de conserver un volume de rétention aussi important que dans le cas où le bac est disposé sur une toiture plate. Par ailleurs, l'eau issue d'un bac précultivé positionné au-dessus de cette fermeture partielle qui lui sert éventuellement de support va se déverser sur cette fermeture, où elle va ruisseler en étant amenée, via l'ouverture 50, dans le bac de rétention sous-jacent sur la pente. Le déversement de l'eau de la surface d'un bac à l'intérieur du bac sous-jacent est assuré par un débordement 52 de la fermeture partielle du premier bac dans l'ouverture 51 du deuxième bac (autrement, l'eau risquerait de percoler entre les deux bacs).

Dans ce cas de figure, on vient préférentiellement agencer le système de régulation au niveau de l'arête en fond de bac de manière à ce que le bras relié au flotteur reste perpendiculaire à la surface de l'eau.

Le bac selon l'invention comprend avantageusement des moyens d'accrochage à un bac similaire adjacent. Ceci permet de faciliter les opérations de pose des bacs sur des toitures, terrasses ou balcons.

Lorsque plusieurs bacs sont ainsi connectés, on peut en outre avantageusement prévoir qu'un seul bac assure la fonction d'évacuation (évacuation de faible débit et de trop-plein) pour un ensemble de bacs. On vient ainsi réduire le nombre de systèmes d'évacuation.

En outre, en connectant ainsi les bacs, on vient agrandir le volume de rétention temporaire. On peut alors, pour un même débit de fuite considéré, agrandir la surface de l'orifice d'évacuation ce qui permet de réduire les risques de colmatage. A contrario, si on ne modifie pas la surface de l'orifice d'évacuation, le débit de fuite est réduit.

La connexion des bacs est réalisée de manière à assurer une communication d'eau sur plusieurs mètres carrés.

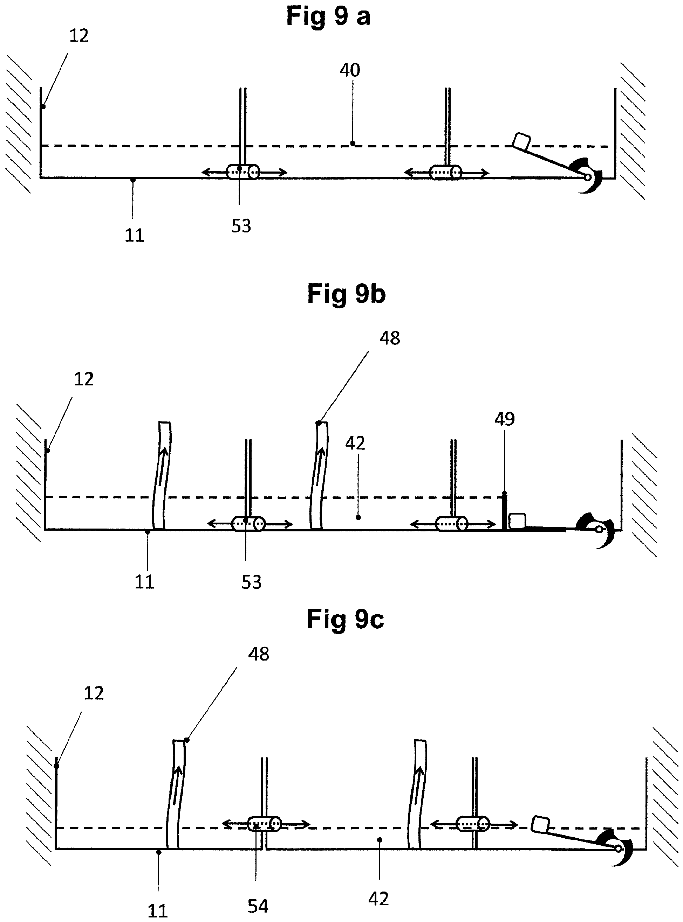

Comme représenté sur la figure 9a, la connexion 53 peut être assurée en fond de bac si on ne souhaite aucun volume d'eau résiduel.

Comme discuté précédemment en liaison avec la figure 7, on peut prévoir d'équiper le bac assurant la fonction d'évacuation d'une cloison 49 partant du fond définissant un volume de stockage résiduel 42. Comme représenté sur la figure 9b, la connexion 53 entre les bacs peut alors être réalisée en fond de bac. En variante (cf. figure 9c), la connexion 53 peut être disposée à une hauteur déterminée par le volume résiduel désiré.

On relèvera pour finir que les moyens d'évacuation d'eau selon un débit de fuite constant ne sont pas nécessairement intégrés en tant que tel à un bac de rétention temporaire d'eau, mais qu'ils peuvent former, comme c'est le cas sur les figures 9a-9c, une pièce séparée apte à être rapportée sur un tel bac, et notamment sur le bac en bout de ligne lorsque plusieurs bacs sont connectés. L'utilisation d'une telle pièce rapportée facilite notamment les opérations d'entretien.

### Signes de référence dans les dessins

1 : toiture
2 : orifice de régulation de débit de fuite
3 : orifice de trop-plein
4 : bacs précultivés
5 : structure en nid d'abeilles
10 : bac de rétention temporaire à débit de fuite maîtrisé
11 : fond du bac de rétention temporaire à débit de fuite maîtrisé
12 : parois du bac de rétention temporaire
14 : orifice de trop-plein dans le fond ou la paroi du bac de rétention temporaire
20 : support de végétalisation
21 : filtre microporeux
22 : substrat de culture
23 : végétation
24 : base du bac précultivé
25 : paroi latérale des alvéoles
26 : agrégats minéraux
27 : paroi latérale entourant la base 24 du bac précultivé 20
28 : surface support reliant les bords supérieurs des parois d'alvéoles
29 : trous de drainage
30 : flotteur
31 : fente dans l'obturateur »portion de disque»
32 : obturateur « portion de disque »
33 : axe de rotation de l'obturateur
34 : bras connecté d'une part au flotteur, d'autre part à l'obturateur
35 : tige servant à éviter le colmatage de l'orifice
36 : orifice de trop-plein dans l'obturateur « portion de disque »
37 : obturateur « corne » traversant le fond du bac
38 : obturateur « corne » traversant la paroi du bac
39 : dépression assurant le trop-plein dans les obturateurs en forme de corne
40 : niveau d'eau quelconque
41 : niveau d'eau maximal, correspondant à la surcharge maximale admissible
42 : volume d'eau résiduel, servant de réserve pour les plantes
43 : obturateur vertical
44 : dépression dans l'obturateur vertical
45 : tuyau poreux guidant l'obturateur verticalement
46 : support cruciforme de l'obturateur vertical
47 : ergots accrochés au support cruciforme de l'obturateur vertical
48 : mèche synthétique assurant la remontée de l'eau vers les plantes par capillarité
49 : cloisons servant à délimiter un volume de stockage
50 : fermeture partielle des bacs pour préserver la capacité de rétention même en pente
51 : ouverture du bac par laquelle entre l'eau de ruissellement provenant du bac sus-jacent
52 : rebord assurant le ruissellement de l'eau de bac en bac sur un toit en pente
53 : connexion entre bacs en fond de bac
54 : connexion entre bacs en hauteur par rapport au fond du bac

## Revendications

1. Bac (10) de rétention temporaire d'eau en toiture d'un bâtiment, comprenant un fond (11), une paroi latérale (12) entourant le fond et un orifice de trop-plein (14)
pour évacuer l'eau en surplus lorsque le volume d'eau
recueilli par le bac (10) excède un volume tampon, les dimensions du fond (11) étant faibles vis-à-vis des dimensions d'une toiture en pente sur laquelle le bac (30) peut être positionné de sorte que la charge d'eau est répartie de façon homogène sur la surface de la toiture lorsqu'une pluralité de bacs (30) de mêmes dimensions recouvre la surface de la toiture, le bac (10) étant **caractérisé en ce**
**qu'**il comprend des moyens d'évacuation d'eau (13)
configurés pour contraindre
l'eau d'un volume de stockage temporaire inférieur au volume tampon à s'écouler selon un débit de fuite constant, lesdits moyens d'évacuation d'eau (13) comprenant un obturateur (37, 38, 43)
contrôlé pour modifier l'ouverture d'un orifice
d'évacuation (13, 14) lorsque le niveau de l'eau du volume de stockage temporaire diminue ou augmente de manière à évacuer l'eau du volume tampon selon un débit de fuite constant.

2. Bac selon la revendication 1, dans lequel l'obturateur est associé à un flotteur (30) par l'intermédiaire d'un bras (34), le bras étant apte à pivoter en réponse au changement du volume de stockage temporaire d'eau détecté par le flotteur pour entraîner une rotation de l'obturateur devant ou à travers l'orifice d'évacuation.

3. Bac selon la revendication 2, dans lequel l'obturateur est une portion de disque (32) apte à être entraînée en rotation devant l'orifice d'évacuation et dans laquelle est pratiquée une fente (31) d'ouverture progressive assurant un débit de fuite constant à travers la fente.

4. Bac selon la revendication 2, dans lequel l'obturateur est une corne (37, 38) apte à être entraînée en rotation à travers l'orifice d'évacuation, la corne étant conformée de manière à assurer un débit de fuite constant à travers l'orifice d'évacuation

5. Bac selon la revendication 1, dans lequel l'obturateur est un cône (43) apte à être entraîné en translation par un flotteur (30) à travers l'orifice (14), la section du cône diminuant à l'approche du flotteur de sorte que l'ouverture de l'orifice d'évacuation diminue au fur et à mesure que le niveau d'eau augmente dans le bac en assurant ainsi un débit de fuite constant.

6. Bac selon l'une des revendications 1 à 5, dans lequel l'orifice de trop-plein constitue l'orifice d'évacuation.

7. Bac selon l'une des revendications 1 à 5, dans lequel l'orifice d'évacuation est distinct de l'orifice de trop-plein, l'orifice de trop-plein étant agencé au-dessus de l'orifice d'évacuation à une distance définissant le volume tampon.

8. Bac selon l'une des revendications 1 à 7, comprenant en outre des moyens perméables de support d'un complexe de végétation.

9. Bac selon la revendication 8, dans lequel les moyens perméables de support sont formés par une grille supportée par une ou plusieurs surfaces support définies par des îlots s'étendant depuis le fond.

10. Bac selon la revendication 8, dans lesquels les moyens perméables de support du complexe de végétation sont formés par un bac précultivé (20) conformé pour venir s'encastrer dans le bac de rétention temporaire d'eau, ou venu de matière avec le bac de rétention temporaire d'eau.

11. Bac selon la revendication 8, comprenant une pluralité de cloisons de séparation constituées de parois d'alvéoles (25) s'étendant depuis le fond et d'une surface support (28) reliant les bords supérieurs des parois, formant avec le fond une pluralité d'alvéoles, une pluralité de trous de drainage (29) étant formée à travers les surfaces support pour former lesdits moyens perméables de support d'un complexe de végétation.

12. Bac selon l'une des revendications 1 à 7, comprenant en outre une dalle porteuse perméable agencée parallèlement au fond.

13. Bac selon l'une des revendications 1 à 12, comprenant en outre une fermeture étanche partielle (50) s'étendant depuis la partie supérieure de la paroi latérale.

14. Bac selon l'une des revendications 1 à 13, dans lequel le débit de fuite régulé est au plus de 10l/s/ha et de préférence au plus de 5l/s/ha.

15. Ensemble de rétention temporaire d'eau en toiture d'un bâtiment constitué d'une pluralité de bacs accrochés entre eux dont l'un au moins est bac selon l'une quelconque des revendications 1 à 14.

## Patentansprüche

1. Temporäre Auffangwanne (10) für Wasser am Dach eines Gebäudes, die einen Boden (11) enthält, eine Seitenwand (12), die den Boden umgibt, sowie eine Überlauföffnung (14) zum Ableiten des überschüssigen Wassers, wenn das von der Wanne (10) aufgenommene Wasservolumen ein Puffervolumen übersteigt, wobei die Abmessungen des Bodens (11) gegenüber den Abmessungen eines Schrägdaches, auf dem die Wanne (30) positioniert werden kann, gering sind, sodass sich die Wasserbelastung gleichmäßig auf die Dachfläche verteilt, wenn eine Vielzahl von Wannen (30) mit denselben Abmessungen die Dachfläche abdeckt, wobei die Wanne (10) **dadurch gekennzeichnet ist, dass** sie Entwässerungsmittel (13) umfasst, die konfiguriert sind, um das Wasser mit einem temporären Speichervolumen, das kleiner ist als das Puffervolumen, dazu zu zwingen, mit einem konstanten Leckagedurchsatz abzulaufen, wobei die besagten Entwässerungsmittel (13) einen gesteuerten Verschluss (37, 38, 43) umfassen, um die Öffnungsfläche einer Entwässerungsöffnung (13, 14) zu ändern, wenn der Wasserstand im temporären Speichervolumen absinkt oder ansteigt, um das Wasser des Puffervolumens mit einem konstanten Leckagedurchsatz abzuleiten.

2. Wanne nach Anspruch 1, wobei der Verschluss über einen Arm (34) mit einem Schwimmer (30) verbunden ist, wobei der Arm imstande ist, als Reaktion auf die Veränderung des temporären Wasserspeichervolumens, welches vom Schwimmer erfasst wird, zu schwenken, um eine Rotation des Verschlusses vor oder durch die Entwässerungsöffnung hindurch zu veranlassen.

3. Wanne nach Anspruch 2, wobei der Verschluss ein Scheibenabschnitt (32) ist, der imstande ist, vor der Entwässerungsöffnung in Rotation versetzt zu werden, und in dem ein Spalt (31) mit einer progressiven Öffnung eingearbeitet ist, der für einen konstanten Leckagedurchsatz durch den Spalt sorgt.

4. Wanne nach Anspruch 2, wobei der Verschluss ein Horn (37, 38) ist, das imstande ist, durch die Entwässerungsöffnung hindurch in Rotation versetzt zu werden, wobei das Horn derart ausgeformt ist, um für einen konstanten Durchsatz durch die Entwässerungsöffnung hindurch zu sorgen.

5. Wanne nach Anspruch 1, wobei der Verschluss ein Konus (43) ist, der imstande ist, durch einen Schwimmer (30) durch die Öffnung (14) hindurch angeschoben zu werden, wobei sich der Querschnitt des Konus in Richtung des Schwimmers verringert, sodass die Öffnungsfläche der Entwässerungsöffnung nach und nach kleiner wird, je höher der Wasserstand in der Wanne ansteigt, und somit für einen konstanten Leckagedurchsatz sorgt.

6. Wanne nach einem der Ansprüche 1 bis 5, wobei die Überlauföffnung die Entwässerungsöffnung bildet.

7. Wanne nach einem der Ansprüche 1 bis 5, wobei die Entwässerungsöffnung von der Überlauföffnung getrennt ist, wobei die Überlauföffnung in einem Abstand oberhalb der Entwässerungsöffnung angeordnet ist, der das Puffervolumen definiert.

8. Wanne nach einem der Ansprüche 1 bis 7, die darüber hinaus durchlässige Trägermittel für einen Vegetationskomplex enthält.

9. Wanne nach Anspruch 8, wobei die durchlässigen Trägermittel durch ein Gitter geformt werden, das durch eine oder mehrere Trägerflächen gehalten wird, welche durch Blöcke definiert werden, die sich aus dem Boden heraus erstrecken.

10. Wanne nach Anspruch 8, wobei die durchlässigen Trägermittel für den Vegetationskomplex durch eine vorbepflanzte Wanne (20) geformt werden, der ausgeformt ist, um in der temporären Auffangwanne für Wasser einzurasten, oder in Materialeinheit mit der temporären Auffangwanne für Wasser.

11. Wanne nach Anspruch 8, die eine Vielzahl von Trennwänden enthält, die aus Zellwänden (25) gebildet werden, die sich aus dem Boden heraus erstrecken, und mit einer Trägerfläche (28), welche die oberen Ränder der Wände miteinander verbindet, und mit dem Boden eine Vielzahl von Zellen formt, eine Vielzahl von Drainagelöchern (29), die durch die Trägerflächen hindurch geformt werden, um die besagten durchlässigen Trägermittel für einen Vegtationskomplex zu formen.

12. Wanne nach einem der Ansprüche 1 bis 7, die darüber hinaus eine durchlässige Trägerplatte enthält, die parallel zum Boden angeordnet ist.

13. Wanne nach einem der Ansprüche 1 bis 12, die darüber hinaus einen dichten Teilverschluss (50) enthält, der sich aus dem oberen Abschnitt der Seitenwand heraus erstreckt.

14. Wanne nach einem der Ansprüche 1 bis 13, wobei der geregelte Leckagedurchsatz höchstens 10 1/s/ha, und vorzugsweise höchstens 5 1/s/ha beträgt.

15. Temporäre Auffangeinheit für Wasser am Dach eines Gebäudes, die aus einer Vielzahl von Wannen gebildet wird, die aneinander festgemacht sind, von denen zumindest eine eine Wanne nach einem der Ansprüche 1 bis 14 ist.

## Claims

1. Container (10) for temporarily holding water on the roof of a building, comprising a bottom (11), a side wall (12) surrounding the bottom and an overflow opening (14) for draining surplus water when the volume of water collected by the container (10) exceeds a buffer volume, the dimensions of the bottom (11) are small with respect to the dimensions of a sloped roof whereon the container (30) can be positioned in such a way that the load of water is distributed homogeneously over the surface of the roof when a plurality of containers (30) of the same dimensions covers the surface of the roof, the container (10) being **characterised in that** it comprises water-draining means (13) configured to force the water with a temporary storage volume which is lower than the buffer volume to flow according to a regulated leakage rate, said water-draining means (13) comprising a shutter (37, 38, 43) controlled to modify the opening of a draining opening (13, 14) when the level of the water of the temporary storage volume decreases or increases in such a way as to drain the water from the buffer volume according to a regulated leakage rate.

2. Container according to claim 1, wherein the shutter is associated with a float (30) by the intermediary of an arm (34), with the arm being able to pivot in response to the change in the temporary storage volume of water detected by the float in order to drive a rotation of the shutter in front of or through the draining opening.

3. Container according to claim 2, wherein the shutter is a portion of a disc (32) able to be driven in rotation in front of the draining opening and wherein is made a slot (31) for a progressive opening that provides a regulated leakage rate through the slot.

4. Container according to claim 2, wherein the shutter is a horn (37, 38) able to be driven in rotation through the draining opening, with the horn being shaped in such a way as to provide a regulated leakage rate through the draining opening.

5. Container according to claim 1, wherein the shutter is a cone (43) able to be driven in translation by a float (30) through the opening (14), with the section of the cone decreasing as it approaches the float in such a way that the opening of the draining opening decreases as the level of water increases in the container by assuring as such a regulated leakage rate.

6. Container according to one of claims 1 to 5, wherein the overflow opening constitutes the draining opening.

7. Container according to one of claims 1 to 5, wherein the draining opening is separate from the overflow opening, the overflow opening being arranged above the draining opening at a distance defining the buffer volume.

8. Container according to one of claims 1 to 7, further comprising permeable means for supporting a vegetation complex.

9. Container according to claim 8, wherein the permeable means for supporting are formed by a grille supported by one or several support surfaces defined by islands extending from the bottom.

10. Container according to claim 8, wherein the permeable means for supporting the vegetation complex are formed by a pre-cultivated container (20) shaped to nest into the container for temporarily holding water, or of a single piece with the container for temporarily holding water.

11. Container according to claim 8, comprising a plurality of separation walls constituted of walls of cells (25) extending from the bottom and a surface support (28) connecting the upper edged of the walls, forming with the bottom a plurality of cells, a plurality of drainage holes (29) being formed through the surfaces support in order to form said permeable means for supporting a vegetation complex.

12. Container according to one of claims 1 to 7, further comprising a permeable supporting slab arranged partially at the bottom.

13. Container according to one of claims 1 to 12, further comprising a partially sealed closing (50) extending from the upper portion of the side wall.

14. Container according to one of claims 1 to 13, wherein the regulated leakage rate is at most 10l/s/ha, and preferably at most 5l/s/ha.

15. Assembly for temporarily holding water on the roof of a building constituted of a plurality of containers hooked together of which one at least is a container according to any of claims 1 to 14.
